# EUROPEAN PATENT SPECIFICATION

(11) **EP 0 773 662 B1**
(45) Date of publication and mention of the grant of the patent: **14.05.2003**
(21) Application number: 96202917.9
(22) Date of filing: 18.10.1996
(51) Int. Cl.: H04N 1/08, H04N 1/06, H04N 1/12, H04N 1/193

(54) **Drum-type imagesetter with variable diameter**
Bildherstellungstrommel mit veränderlichem Durchmesser
Compositeur d'image à tambour avec diamètre variable

(30) Priority: 13.11.1995 EP 95203078
(43) Date of publication of application: 14.05.1997
(73) Proprietor: AGFA-GEVAERT, 2640 Mortsel (BE)
(72) Inventor: Van Aken, Luc, 2640 Mortsel (BE); Vackier, Bert, 2640 Mortsel (BE); Van den Eynde, Karel, 2640 Mortsel (BE)

(56) References cited:
- WO-A-93/14441
- DE-A- 4 313 111
- US-A- 4 575 398
- US-A- 5 026 045
- US-A- 5 317 424

## Description

### BACKGROUND OF THE INVENTION

### Field of the invention.

The present invention relates to a drum-type imagesetter for producing an image on a flexible sheet of radiation-sensitive material.

### Description of the prior art.

The art of drum-type imagesetters comprises two types of apparatus.

First, the so-called internal drum recorders in which a flexible light-sensitive sheet is held against the inside surface of a stationary drum and is line-wise exposed by means of a rotating prism which deflects an axial laser beam at right angles onto the surface of the sheet. The mirror and its driving motor are mounted on a carriage which can travel axially through the drum thereby to cover the exposure width (i.e. the dimension parallel to the drum axis) of the apparatus.

Disadvantages of this type of apparatus are as follows :
the duty cycle is limited; a typical maximum of exposure period versus revolution period is approximately 70 %; moreover, this ratio changes with the film sheet length (i.e. the dimension normal to the drum axis);
since the laser beam follows the centre line of the internal drum, one has to be careful with the generation of stray light; and
finally, sheet handling is difficult, in particular for relatively stiff sheets such as aluminium offset plates, and for small drum diameters.

A second class of apparatus are external drum recorders in which a light-sensitive sheet is fitted to the outside surface of a rotating drum, and the exposure occurs by a light source travelling along the outer periphery of the drum. These apparatus show the following disadvantages :
their rotational speed is limited (typically 2500 rpm) because of the high inertia of the drum, and
the duty cycle depends on the length of the light-sensitive sheets, in a way comparable with internal drum recorders.

US-A-5 026 045 discloses a sheet-guiding drum assembly for printing machines. The drum diameter can be adjusted to compensate for the thickness of the material which is being printed on.

WO 93 14441 discloses a virtual drum imagesetter that does not actually have a drum; instead, the photosensitive material to be imaged is supported in a cylindrical shape by spaced internal discs.

### SUMMARY OF THE INVENTION.

### Objects of the invention.

It is one object of the present invention to provide a light-weight imagesetter which allows to obtain higher duty cycles than known apparatus. In the best case, the duty cycle can amount up to 100 % if leading and trailing edges of a sheet are in abutting relationship.

A further object of the invention is a rotating drum-type image recorder with a limited inertia so that the rotational speed can be higher than in conventional apparatus (typically up to 2500 rpm).

Still another object of the invention is an imagesetter the loading of which is more convenient than known apparatus. This is important for the loading of relatively stiff materials such as aluminium offset printing plates that can not readily be bent and made to conform to the circumference of the drum upon their loading, especially if the drum diameter is small.

### Statement of the invention.

In accordance with the present invention, a drum-type imagesetter having the features as claimed in claim 1.

The sheet retaining means is arranged for entering in supporting contact with local areas only of a sheet, thus forming so to say a virtual drum.

The absence of a rigid and uninterrupted cylindrical surface to back up the sheet to be image-wise exposed notably reduces the mass of the revolving parts of the apparatus, if the drum rotates and the exposure source is stationary. The resulting smaller inertia thus allows higher rotational speeds than usual to be used. Further a relatively light-weight overall construction can result.

According to one aspect of the invention, the sheet retaining means comprises means having radially inward surfaces for entering in physical contact with the outside surface, i.e. the convexly curved side, of the sheet, and are arranged for rotation about the axis of the drum thereby to force said sheet in tight engagement with said inward surfaces under the influence of centrifugal forces.

When film, paper or almost any other flexible sheet material is rolled into a cylindrical shape, the material achieves a greater rigidity and stability than when supported in flat or planar condition. This is the more so for aluminium lithographic printing plates which are still flexible but yet more rigid, i.e. having a greater rigidity than photosensitive film or paper. The cylindrical configuration of these plates is maintained also if the radially inward surfaces of the sheet retaining means are no continuous circular surfaces, but instead distinct surfaces equally angularly spaced thus rather forming a polygon for support of the plates.

The aspect of the invention described hereinbefore relates to internal drum exposure. However, an apparatus according to the invention is suited as well for external exposure and in such case the sheet retaining means will have radially outward surfaces for supporting the inward surface, viz. the concavely curved side of a sheet. In the latter case, additional means will be provided for keeping the sheet in contact with such supporting surfaces during rotation and at standstill of the drum.

The possibility afforded by the imagesetter according to the invention to use different drum diameters is important since it allows the circumference of the drum to match as close as possible the length of the sheet whereby a sheet can be made to cover up to at least 325 angular degrees of the drum corresponding with a a duty cycle of 90 %. Depending on the construction of the apparatus, a duty cycle theoretically up to 100 % can be obtained.

Another interesting aspect of a variable drum diameter is that, in the case of internal drum exposure, the drum can be opened to a relatively large diameter whereby loading and/or unloading of a sheet can be easier. After loading of the sheet the drum diameter is reduced so that a higher duty cycle and a smaller inertia are obtained. This operation is in particular interesting for the loading of relatively stiff sheets such as aluminium offset printing plates which are less easy to manipulate. However, although the accent in the present description is on such plates, it should be understood that an imagesetter according to the present invention is as well suited for use with paper, plastic and other types of flexible supports for use in image-wise exposure.

The aspects described hereinbefore related to an imagesetter with rotating drum and stationary exposure means. It will be understood that the drum may as well be stationary and the exposure means rotating for the same advantages to be obtained, viz. an increased duty cycle and an easier loading.

The means for image-wise exposure of a sheet can be of the active or passive type. With active means we mean LED's (light-emitting diodes), conventional and high power lasers, and the like. With passive means we mean light valves capable of interrupting or modulating radiation from one or a plurality of sources, one or a plurality of small mirrors that can be deflected to control the amount of radiation reflected from a suitable light source onto the sheet, etc.

The term "radiation-sensitive" stands for light- as well as heat-sensitive recording material. A suitable material for heat-mode recording has been disclosed in EP 93 201 858.3.

### BRIEF DESCRIPTION OF THE DRAWINGS.

The invention will be described hereinafter by way of example with reference to the accompanying drawings, wherein :
Figs. 1a, 1b and 1c show one embodiment of an adjustable imagesetter according the internal-drum type according to the invention,
Figs. 2a to 2f show one embodiment of a method for loading a sheet in an imagesetter according to Figs. 1a and 1b,
Fig. 3 shows an other embodiment of an adjustable imagesetter according to the invention for internal-drum exposure, provided with an elongate exposure head for the image-wise exposure, and
Fig. 4 shows the imagesetter according to Fig. 3, but provided with two separate exposure heads for carrying out the exposure.

### Detailed description of the invention.

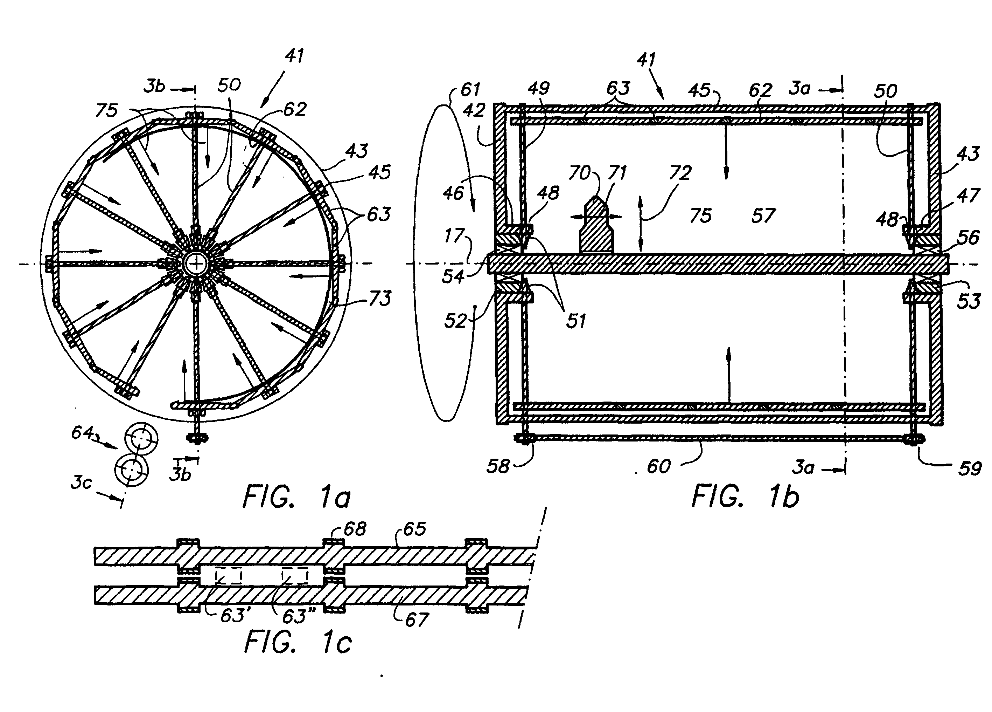

Referring to Figs. 1a to 1c, there is shown an embodiment of a virtual internal drum imagesetter having an adjustable diameter according to the invention.

Drum 41 is a cage-like construction formed by two axially spaced circular flanges 42, 43 rigidly interconnected by parallel bars 45. The flanges have inside hubs 46, 47 with angularly spaced radial bores 48 forming with corresponding bores in bars 45 slide bearings for the rotational bearing of screw-threaded radial shafts 49, 50. The inside ends of the shafts have conical pinions 51 engaging crown wheels 52, 53 rotatably journalled in corresponding hubs 46, 47. The crown wheels are also rotatably journalled on a stationary shaft 57 by means of roller bearings 54, 56. One shaft of each of series 49, 50 bears a gear wheel 58, 59, a timing belt 60 or the like coupling both gears to each other. Main shaft 57 is supported in the light-tight housing of the apparatus and one of flanges 42, 43 can be provided with a pulley, a gear or the like for coupling the drum to a suitable driving motor so that the drum can be rotated as indicated by arrow 61.

The apparatus comprises a number of sheet-supporting bars 62, twelf in the present example, the ends of which are in screw-threaded engagement with radial shafts 49, 50. Each bar 62 has a number of cross bars in the form of fingers 63 extending at a right angle on both sides thereof, the fingers of adjacent bars 62 being axially shifted, as shown for the upper and lower bars in Fig. 1b, so that they interengage each other. The purpose of the interengaging fingers is to define an uninterrupted peripheral guiding path for a sheet as it is tangentially loaded into the drum. The fingers can be straigth as shown, but can also be curved, the radius of curvature of their inside surfaces being larger than that of the largest diameter of the drum.

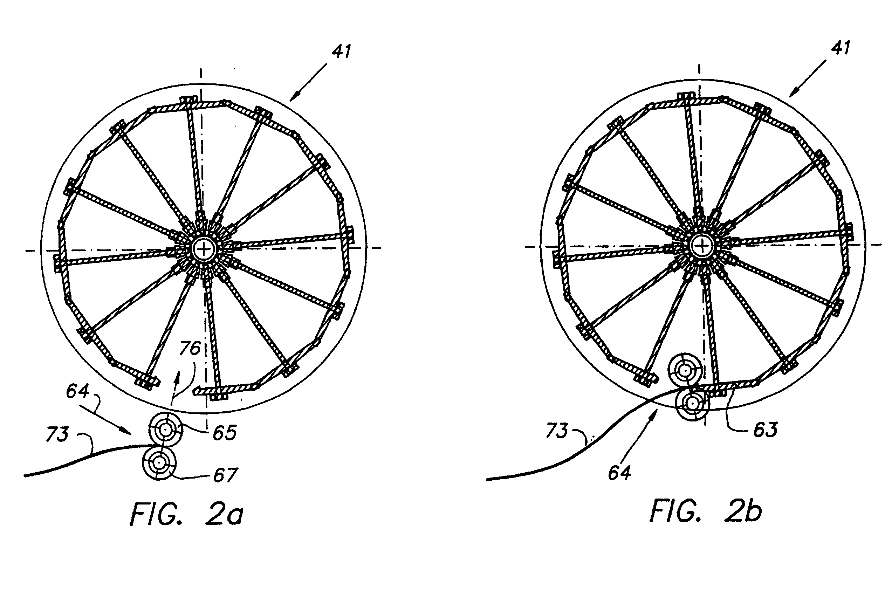

The apparatus finally comprises a sheet feeding roller pair 64 the two rollers 65 and 67 of which, see Fig. 1c which is a cross-section on line 1c-1c of Fig. 1b, have a crenelated profile, the larger diameter sections having a resilient covering 68 for driving engagement with the sheet surface. At one position there have been shown the interengaging fingers 63' and 63" of opposed bars 62. This construction will be further explained with reference to Figs. 2a to 2f hereinafter.

Finally, the apparatus comprises an exposure head 70 which is mounted for translation on shaft 57 as indicated by arrow 71, and which is provided with focussing means for focussing, see the arrow 72, its radiation beam onto a sheet in the drum.

Exposure head 70 is moved by suitable driving means, and its electrical connections can be passed through shaft 57 for outside connection. The head can comprise a single radiation source or an elongated array of adjacent sources running parallel to the drum. In operation of the imagesetter, a sheet 73 within the drum, see Fig.1a, is helically exposed as the drum rotates and the exposure head axially moves from one end to the other of the drum.

Rotation of the drum causes the sheet to be firmly applied against supporting fingers 63 by centrifugal forces and/or by stops engaging its leading and trailing edge, and as a consequence of its increased stiffness in a direction parallel to the drup axis, aluminium plate 73 assumes a cylindrical shape.

The duty cycle of the illustrated example is limited since, as shown, the sheet occupies approximately 225 angular degrees only of the drum. However, this imagesetter has a variable diameter, and by appropriate rotation of belt 60, e.g. through a small electric motor with reduction gear, radial shafts 49, 50 are rotated synchronously whereby bars 62 can be approached towards each other, as shown by arrows 75 in Fig. la. In that way a situation can be obtained in which the sheet covers at least 350 angular degrees of the drum.

A suitable method of loading of the apparatus is now described in detail with reference to Figs. 2a to 2f.

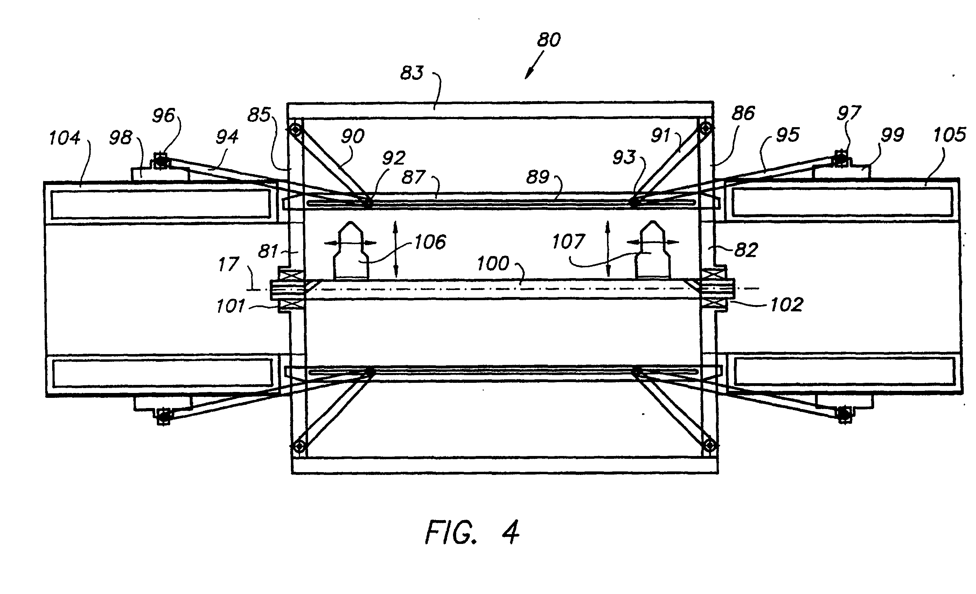

Drum 41 being in an angular position as shown in Fig. 2a, feed roller pair 64 is rotated until the leading end of sheet 73 is gripped in the nip of the rollers. The rollerpair which is bodily displaceable as shown by arrow 76 in dashed line is next swung upwardly, see Fig. 4b, whereby the leading end of the sheet becomes located inside the drum. Fingers 63 do not interfere with the roller movement since the smaller sections of the rollers provide space for the fingers, see Fig. 1c.

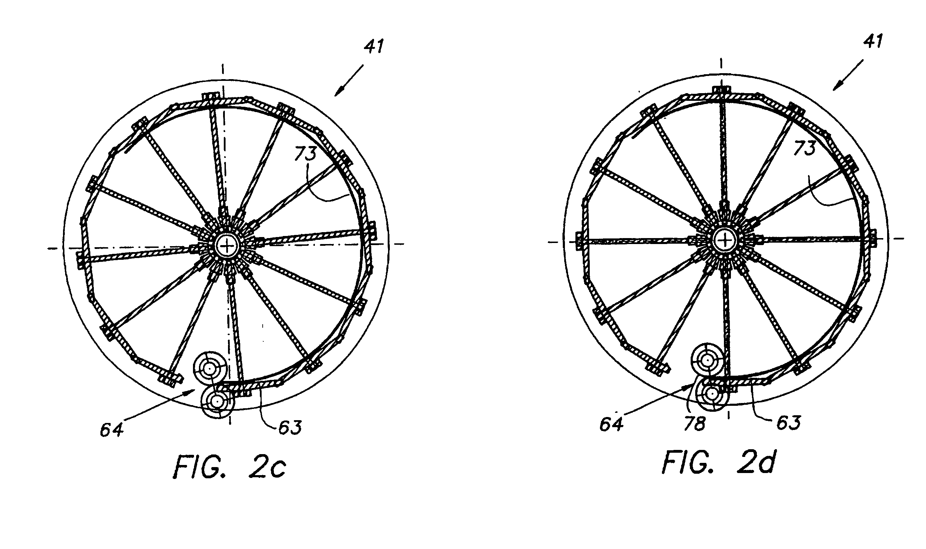

Next, rollerpair 64 is driven to introduce the sheet almost completely in the drum, see Fig. 2c. Then drum 41 is slightly angularly rotated in backward direction, see Fig. 2d, whereby the trailing end of the sheet passes beyond stop 78 formed by a hook-like extension on each of fingers 63 at one end of the drum opening.

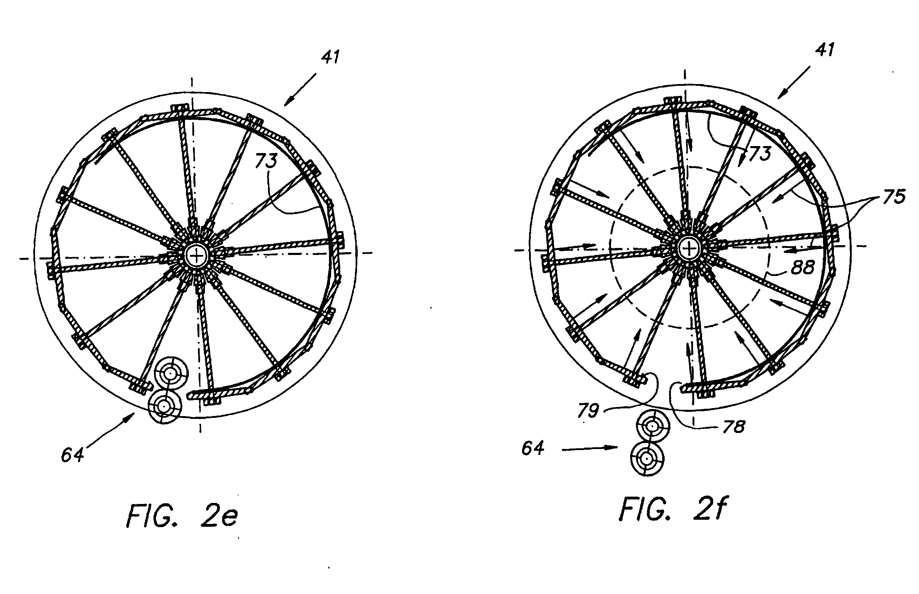

Next drum 41 is rotated forward into its start position, see Fig. 2e, so that rollerpair 64 can be withdrawn into its original position outside the drum. The diameter adjustment mechanism is now actuated, see the arrows 75 in Fig. 2f, whereby the drum diameter is reduced until the leading and trailing sheet edges become clamped between end stops 78, 79, being located at that moment on a diameter 88 drawn in broken lines. It will be understood that the focussing means of the exposure head has to be adjusted in accordance with the distance to the radiation sensitive sheet. Therefore it is interesting to use auto-focussing means controlled by any suitable feed back system which is responsive to the actual distance between the sheet and the exposure source..

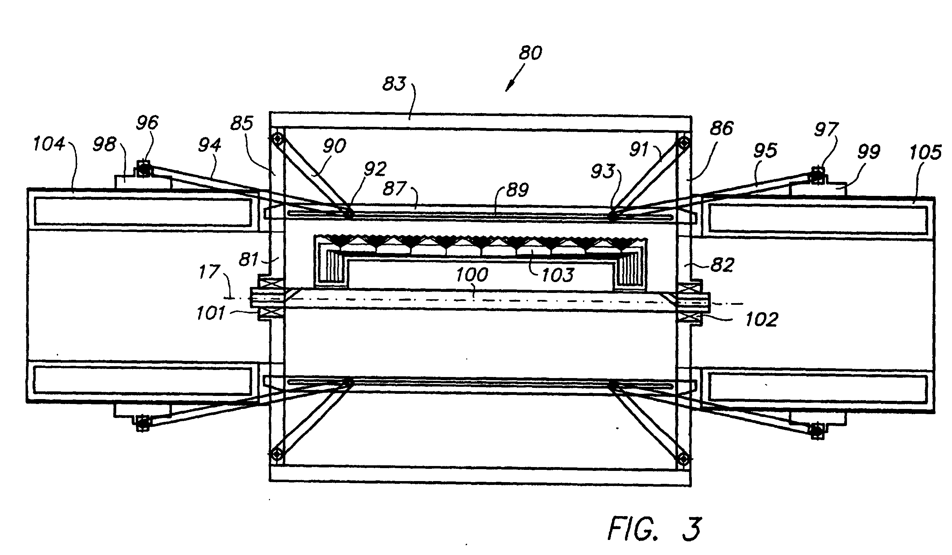

Fig. 3 illustrates another embodiment of a drum imagesetter with adjustable diameter.

Drum 80 is in fact a cage formed by two axially spaced disc-like flanges 81, 82 interconnected by ribs 83. The flanges are rotatably journalled on the stationary shaft 100 of the drum by means of roller bearings 101, 102.

Both flanges have radial grooves 85, 86 guiding the ends of radially displaceable bars 87 having over nearly their complete length a slot 89. Arms 90 and 91 pivotally connected at one end at respective flanges 81 and 82, have their other end slideably connected to groove 89 of bars 87 by means of pins 92, 93. The axial position of the pins is controlled by arms 94, 95 pivotally connected to rings 96, 97 rotatable in a corresponding groove of adjustment sleeves 98, 99 threadably engaging hubs 104, 105 that make part of the corresponding flanges of the drum.

Adjustment of the radial position of bars 87, and thus of the inside diameter of the drum, is obtained by changing the axial position of rings 96, 97 by appropriate rotation of sleeves 98, 99 with respect to the hubs. The arms 94, 95 correspondingly alter the axial position of pins 92, 93 and in consequence the radial position of said pins, and thus of bars 87, is changed.

The exposure of a sheet inside the rotating virtual drum occurs in the present example by means of a multi-element exposure head 103. This head comprises a multiplicity of LED's with associated driving circuits and appropriate focussing means, e.g. in the form of a Selfoc (Tradename), for focussing the image of the LED's on the innerside surface of the light-sensitive sheet. A suitable embodiment of a LED head with staggered rows of LED's on abutting arrays is disclosed in US-A 4 536 778 of the present assignee.

Fig. 4 shows a virtual drum imagesetter with variable diameter according to Fig. 3 wherein, however, two exposure heads 106, 107 that each either comprise a single radiation source, or an elongate array of a plurality of sources are provided.

Both exposure heads can either mechanically or electronically be coupled to work together, thereby to cover each half the exposure width of the apparatus. It is clear that three or more exposure heads can be provided working together to constitute a multi-channel writing system.

## Claims

1. Drum-type imagesetter for producing an image on a flexible sheet of radiation-sensitive material, which comprises
- retaining means (62, 63, 87) for retaining said sheet in a substantially cylindrical configuration, and
- exposure means (70, 103, 106, 107), arranged for image-wise, internal exposure of said curved sheet;
**characterised in that** said sheet retaining means comprises
- means (62, 63, 87) having radially inward surfaces, equally angularly spaced, for entering in supporting contact with local areas only of said sheet, thus forming a virtual drum, and
- adjustment means for changing a diameter of said virtual drum for obtaining an optimum duty cycle for different sheet formats.

2. Drum-type imagesetter according to claim 1, wherein said exposure means comprises an auto-focusing system.

3. Drum-type imagesetter according to any of claims 1 to 2, wherein said exposure means comprises a linear multi-element radiation array (103) aligned with the axis (17) of the drum and covering the complete exposure width (i.e. the sheet dimension parallel to the axis of the drum) of the imagesetter.

4. Drum-type imagesetter according to any of claims 1 to 2, wherein said exposure means comprises at least one linear multi-element radiation array (70) aligned with the axis of the virtual drum and covering part only of the exposure width, and means for moving said array parallel to the axis of the drum thereby to cover the complete exposure width of the imagesetter as the drum rotates.

5. Drum-type imagesetter according to any of claims 1 to 2, wherein said exposure means comprises a single-element radiation source, and means for moving said radiation source parallel to the axis of the drum thereby to cover the complete exposure width of the imagesetter.

6. Drum-type imagesetter according to any of claims 1 to 2, wherein said exposure means comprises at least two writing heads mutually spaced according to the axis of the drum, and means for moving said sources simultaneously and parallel to the drum axis whereby they perform as a multi-channel writing system.

7. Drum-type imagesetter according to any of claims 1 to 6, wherein said exposure means comprises a laser.

8. Drum-type imagesetter according to any of claims 1 to 6, wherein said exposure means comprises LED's.

9. Drum-type imagesetter according to any of claims 1 to 8, which is arranged for optical exposure.

10. Drum-type imagesetter according to any of claims 1 to 8, which is arranged for heat-mode exposure.

11. Drum-type imagesetter according to any of claims 1 to 10, wherein said sheet retaining means comprises a plurality of angularly equispaced bars (62, 87) running parallel to the drum axis at a radial distance therefrom equal to the drum radius.

12. Drum-type imagesetter according to claim 11, wherein said adjustment means comprises radial screw-threaded shafts (49, 50) which are in screw-threaded engagement with said bars (62), and means (58, 59, 60) for synchronously rotating said shafts to change the radial position of said bars(62), thus adjusting the drum diameter.

13. Drum-type imagesetter according to claim 11, wherein said bars (87) have longitudinal slots (89), said slots are engaged by pins (92, 93) fitted to pivotable arms (90, 91), and control means is provided for controlling the angular position of said pivotable arms.

14. Drum-type imagesetter according to claim 13, wherein said control means comprises control arms (94, 95) connected at one end to the axially moveable ends of said pivotable arms (90, 91) and at the other end to a control ring (96, 97), the position of which is adjustable with respect to the drum.

15. Drum-type imagesetter according to claim 14, wherein the position of said control ring is controlled by means of a sleeve (98, 99) which is in threaded engagement with a hub (104, 105) making part of the drum.

16. Method of producing an image on a flexible sheet of radiation sensitive material by means of a drum-type imagesetter according to any of claims 1 to 15, comprising the steps of setting the diameter of said imagesetter to a large value for loading a light-sensitive sheet, and next setting said diameter to a small value for carrying out the image-wise exposure of the sheet.

17. Method according to claim 16, wherein the setting of said diameter to a smaller value is such that the radiation sensitive sheet covers at least 325 angular degrees (approx. 90%) of the drum.

## Patentansprüche

1. Trommelbelichter zur Erzeugung eines Bildes auf einem flexiblen Flächengebilde aus strahlungsempfindlichem Material, der Folgendes umfasst:
- ein Haltemittel (62, 63, 87) zum Halten des Flächengebildes in einer im Wesentlichen zylindrischen Konfiguration, und
- ein Belichtungsmittel (70, 103, 106, 107), das zur bildmäßigen Innenbelichtung des gekrümmten Flächengebildes angeordnet ist;
**dadurch gekennzeichnet, dass** das Flächengebildehaltemittel Folgendes umfasst:
- ein Mittel (62, 63, 87) mit radial nach innen verlaufenden Flächen die zum Eintritt in Stützkontakt mit lokalen Bereichen des Flächengebildes winkelförmig gleichmäßig beabstandet sind und somit eine virtuelle Trommel bilden, und
- ein Einstellmittel zum Ändern des Durchmessers der virtuellen Trommel zum Erhalt eines optimalen Tastverhältnisses für verschiedene Flächengebildeformate.

2. Trommelbelichter nach Anspruch 1, bei dem das Belichtungsmittel ein Selbstfokussierungssystem umfasst.

3. Trommelbelichter nach einem der Ansprüche 1 bis 2, bei dem das Belichtungsmittel eine lineare Mehrelement-strahlungsanordnung (103) umfasst, die auf die Achse (17) der Trommel ausgerichtet ist und die vollständige Belichtungsbreite (das heißt die Flächengebildeabmessung parallel zur Trommelachse) des Belichters abdeckt.

4. Trommelbelichter nach einem der Ansprüche 1 bis 2, bei dem das Belichtungsmittel mindestens eine lineare Mehrelement-Strahlungsanordnung (70), die auf die Achse (17) der Trommel ausgerichtet ist und nur einen Teil der Belichtungsbreite abdeckt, und Mittel zur Bewegung der Anordnung parallel zur Trommelachse zur vollständigen Abdeckung der Belichtungsbreite des Belichters bei Drehung der Trommel umfasst.

5. Trommelbelichter nach einem der Ansprüche 1 bis 2, bei dem das Belichtungsmittel eine Einzelelement-Strahlungsquelle und Mittel zur Bewegung der Strahlungsquelle parallel zur Trommelachse zur vollständigen Abdeckung der Belichtungsbreite des Belichters umfasst.

6. Trommelbelichter nach einem der Ansprüche 1 bis 2, bei dem das Belichtungsmittel mindestens zwei Schreibköpfe, die gemäß der Trommelachse gegenseitig beabstandet sind, und Mittel zur gleichzeitigen Bewegung der Quellen parallel zur Trommelachse, wodurch sie wie ein Mehrkanal-Schreibsystem wirken, umfasst.

7. Trommelbelichter nach einem der Ansprüche 1 bis 6, bei dem das Belichtungsmittel einen Laser umfasst.

8. Trommelbelichter nach einem der Ansprüche 1 bis 6, bei dem das Belichtungsmittel LEDs umfasst.

9. Trommelbelichter nach einem der Ansprüche 1 bis 8, der zur optischen Belichtung angeordnet ist.

10. Trommelbelichter nach einem der Ansprüche 1 bis 8, der zur Belichtung unter Verwendung von Wärme angeordnet ist.

11. Trommelbelichter nach einem der Ansprüche 1 bis 10, bei dem das Flächengebildehaltemittel mehrere winkelförmig gleichmäßig beabstandete Stäbe (62, 87) umfasst, die sich parallel zur Trommelachse und in einem radialen Abstand dazu, der gleich dem Trommelradius ist, erstrecken.

12. Trommelbelichter nach Anspruch 11, bei dem das Einstellmittel radiale Spindeln (49, 50), die sich in Schraubeingriff mit den Stäben (62) befinden, und Mittel (58, 59, 60) zum synchronen Drehen der Spindeln zur Änderung der radialen Position der Stäbe (62), um somit den Trommeldurchmesser einzustellen, umfasst.

13. Trommelbelichter nach Anspruch 11, bei dem die Stäbe (87) Längsschlitze (89) aufweisen, wobei die Schlitze durch an schwenkbaren Armen (90, 91) befestigte Stifte (92, 93) in Eingriff genommen werden, und ein Steuermittel zur Steuerung der Winkelposition der schwenkbaren Arme vorgesehen ist.

14. Trommelbelichter nach Anspruch 13, bei dem das Steuermittel Steuerarme (94, 95) umfasst, die an einem Ende mit den axial beweglichen Enden der schwenkbaren Arme (90, 91) und am anderen Ende mit einem Steuerring (96, 97) verbunden sind, dessen Position bezüglich der Trommel einstellbar ist.

15. Trommelbelichter nach Anspruch 14, bei dem die Position des Steuerrings mittels einer Hülse (98, 99) gesteuert wird, die in Schraubeingriff mit einer einen Teil der Trommel bildenden Nabe (104, 105) steht.

16. Verfahren zur Erzeugung eines Bildes auf einem flexiblen Flächengebilde aus strahlungsempfindlichem Material mittels eines Trommelbelichters nach einem der Ansprüche 1 bis 15, bei dem man den Durchmesser des Belichters auf einen großen Wert zur Ladung eines lichtempfindlichen Flächengebildes einstellt und als nächstes den Durchmesser auf einen kleinen Wert zur Durchführung der bildmäßigen Belichtung des Flächengebildes einstellt.

17. Verfahren nach Anspruch 16, bei dem die Einstellung des Durchmessers auf einen kleineren Wert derart ist, dass das strahlungsempfindliche Flächengebilde mindestens 325 Winkelgrad (ca. 90%) der Trommel bedeckt.

## Revendications

1. Photocomposeuse à tambour pour produire une image sur une feuille souple de matériau sensible à un rayonnement, comprenant :
- des moyens de retenue (62, 63, 87) pour retenir ladite feuille dans une configuration essentiellement cylindrique, et
- des moyens d'exposition (70, 103, 106, 107), conçues pour réaliser une exposition interne, selon une image, de ladite feuille incurvée ;
**caractérisée en ce que** lesdits moyens de retenue d'une feuille comprennent :
- des moyens (62, 63, 87) dotés de surfaces tournées radialement vers l'intérieur, espacées à des angles égaux, pour établir un contact porteur uniquement avec des zones locales de ladite feuille, en formant ainsi un tambour virtuel, et
- des moyens de réglage pour modifier le diamètre dudit tambour virtuel en vue d'obtenir un rapport cyclique optimal pour différents formats de feuilles.

2. Photocomposeuse à tambour selon la revendication 1, dans laquelle lesdits moyens d'exposition comprennent un système de mise au point automatique.

3. Photocomposeuse à tambour selon l'une quelconque des revendications 1 à 2, dans lequel lesdits moyens d'exposition comprennent un groupement de rayonnement linéaire à éléments multiples (103) aligné sur l'axe (17) du tambour et couvrant toute la largeur d'exposition (c'est-à-dire la dimension de la feuille parallèle à l'axe du tambour) de la photocomposeuse.

4. Photocomposeuse à tambour selon l'une quelconque des revendications 1 à 2, dans laquelle lesdits moyens d'exposition comprennent au moins un groupement de rayonnement linéaire à éléments multiples (70) aligné sur l'axe du tambour virtuel et ne couvrant qu'une partie de la largeur d'exposition, et un moyen pour déplacer ledit groupement parallèlement à l'axe du tambour pour couvrir ainsi toute la largeur d'exposition de la photocomposeuse pendant la rotation du tambour.

5. Photocomposeuse à tambour selon l'une quelconque des revendications 1 à 2, dans laquelle lesdits moyens d'exposition comprennent une source de rayonnement à un seul élément, et un moyen pour déplacer ladite source de rayonnement parallèlement à l'axe du tambour pour couvrir ainsi toute la largeur d'exposition de la photocomposeuse.

6. Photocomposeuse à tambour selon l'une quelconque des revendications 1 à 2, dans laquelle lesdits moyens d'exposition comprennent au moins deux têtes d'écriture mutuellement espacées suivant l'axe du tambour, et un moyen pour déplacer lesdites sources simultanément et parallèlement à l'axe du tambour, celles-ci se comportant alors comme un système d'écriture à canaux multiples.

7. Photocomposeuse à tambour selon l'une quelconque des revendications 1 à 6, dans laquelle lesdits moyens d'exposition comprennent un laser.

8. Photocomposeuse à tambour selon l'une quelconque des revendications 1 à 6, dans laquelle lesdits moyens d'exposition comprennent des LED.

9. Photocomposeuse à tambour selon l'une quelconque des revendications 1 à 8, conçue pour une exposition optique.

10. Photocomposeuse à tambour selon l'une quelconque des revendications 1 à 8, conçue pour une exposition thermique.

11. Photocomposeuse à tambour selon l'une quelconque des revendications 1 à 10, dans laquelle lesdits moyens de retenue d'une feuille comprennent une pluralité de barres (62, 87) espacées à des angles égaux, s'étendant parallèlement à l'axe du tambour à une distance radiale de celui-ci égale au rayon du tambour.

12. Photocomposeuse selon la revendication 11, dans laquelle lesdits moyens de réglage comprennent des arbres filetés (49, 50) en engagement vissé avec lesdites barres (62), et des moyens (58, 59, 60) pour entraîner lesdits arbres en rotation synchrone en vue de modifier la position radiale desdites barres (62) et régler ainsi le diamètre du tambour.

13. Photocomposeuse à tambour selon la revendication 11, dans laquelle lesdites barres (87) présentent des fentes longitudinales (89), lesdites fentes sont engagées par des broches (92, 93) montées sur des bras pivotants (90, 91), et des moyens de commande sont prévus pour commander la position angulaire desdits bras pivotants.

14. Photocomposeuse à tambour selon la revendication 13, dans laquelle lesdits moyens de commande comprennent des bras de commande (94, 95) reliés, à une extrémité, aux extrémités axialement mobiles desdits bras pivotants (90, 91) et, à l'autre extrémité, à une bague de commande (96, 97) dont la position est réglable par rapport au tambour.

15. Photocomposeuse à tambour selon la revendication 14, dans laquelle la position de ladite bague de commande est commandée au moyen d'un manchon (98, 99) en engagement vissé avec un moyeu (104, 105) faisant partie du tambour.

16. Procédé de production d'une image sur une feuille souple de matériau sensible à un rayonnement au moyen d'une photocomposeuse à tambour selon l'une quelconque des revendications 1 à 15, comprenant les étapes de réglage du diamètre de ladite photocomposeuse sur une valeur importante pour charger ladite feuille sensible à la lumière, puis de réglage du diamètre de ladite photocomposeuse sur une petite valeur pour effectuer l'exposition selon une image de la feuille.

17. Procédé selon la revendication 16, dans lequel le réglage dudit diamètre sur une valeur plus petite est tel que la feuille sensible au rayonnement couvre au moins 325 degrés angulaires (environ 90 %) du tambour.
